# DEMANDE DE BREVET EUROPEEN

(11) **EP 4 782 820 A1**
(43) Date de publication de la demande: **29.07.2026**
(21) Numéro de dépôt: 25223628.6
(22) Date de dépôt: 16.12.2025
(51) Int. Cl.: G01N 21/64, G02B 21/16, G02B 21/36

(54) **SYSTÈME D'OBSERVATION PAR FLUORESCENCE D'UN OBJET PAR EXEMPLE BIOLOGIQUE**

(30) Priorité: 23.01.2025 FR 2500704
(71) Demandeur: Commissariat à l'Energie Atomique et aux Energies Alternatives, 75015 Paris (FR)
(72) Inventeur: BLANDIN, Pierre, 38054 Grenoble cedex 09 (FR); MERMET, Xavier, 38054 Grenoble cedex 09 (FR)
(74) Mandataire: INNOV-GROUP

(57) **Abrégé**

L'invention concerne un système d'observation d'un objet placé dans un contenant (1), ledit dispositif comportant :
- Un module d'excitation (2) comportant plusieurs dispositifs lumineux (20) comportant chacun une sortie par laquelle est émis un signal lumineux, les dispositifs lumineux (20) étant configurés chacun pour émettre sur leur sortie une nappe lumineuse excitatrice (200), suivant un plan d'excitation, lesdits dispositifs lumineux (20) étant agencés de sorte à pouvoir créer sur leurs sorties plusieurs nappes lumineuses excitatrices (200) superposées, suivant plusieurs plans d'excitation parallèles entre eux,
- Un dispositif d'imagerie (3) comportant un axe orienté perpendiculairement aux plans d'excitation et positionné de sorte à capturer une image suivant un plan imagé qui soit superposé à l'un desdits plans d'excitation,
- Une unité de contrôle (UC) configurée pour activer ou désactiver individuellement chaque dispositif lumineux (20), et pour commander ledit dispositif d'imagerie (3) en vue de pouvoir déplacer le plan imagé.

## Description

### Domaine technique de l'invention

La présente invention se rapporte à un système d'observation par fluorescence d'un objet par exemple biologique.

### Etat de la technique

La microscopie dite « light sheet » est connue pour observer un échantillon placé dans un contenant, par fluorescence en trois dimensions. Dans ce type de méthode, une nappe excitatrice est créée pour exciter uniquement une « tranche » fine de l'échantillon. L'objectif de la méthode d'observation de type « light sheet » est d'avoir une nappe excitatrice de fluorescence dont l'épaisseur est comparable à la résolution latérale de l'objectif du microscope, afin d'avoir une résolution isotrope.

Le brevet EP4027182B1 décrit notamment une solution pour analyser des échantillons par microscopie « light sheet », les échantillons étant répartis dans plusieurs puits ou boîtes de Petri juxtaposés.

La publication référencée ci-dessous décrit un principe d'imagerie en trois dimensions utilisant la microscopie de type «lightsheet.
SONG MING ET AL : « Three dimensional multi-directional light-sheet microscopy with structured limitation », 20240312 *Vol.12848, 12 mars 2024 Pages 1284809-1284809, XP060200381, ISSN :1605-7422, https:*//*doi.org*/*10.1117*/*12.3000528*

Le brevet US10,668,468B2 qui décrit un principe d'imagerie d'un échantillon placé dans un puits
Pour créer la nappe excitatrice, une solution avantageuse consiste à utiliser un laser, souvent associé à un guide d'ondes. Il est également possible d'utiliser une source lumineuse classique comme une diode électroluminescente, à laquelle on associe une lentille ou une combinaison de lentilles.

Une source de type laser est actuellement la plus appropriée, puisque les propriétés géométriques et de propagation de tels faisceaux (onde sphérique gaussienne) permettent d'obtenir un confinement adapté au cours de la propagation. Ces propriétés sont extrêmement favorables pour générer un faisceau excitateur sous la forme d'une nappe particulièrement fine. D'une manière générale, avec une source lumineuse quelconque, la nappe va s'épaissir au cours de la propagation. Avec un faisceau laser, cet épaississement va rester très limité. Avec d'autres types de faisceaux moins cohérents, le confinement va disparaitre très vite au cours de la propagation. Les autres sources lumineuses classiques, notamment les diodes électroluminescentes, ont un diagramme de rayonnement beaucoup plus étalé, de type lambertien, moins propice à la création d'une nappe.

Dans les solutions connues, la source lumineuse qui est utilisée est externe au contenant dans lequel est placé l'échantillon à observer, ce qui implique un encombrement global important pour le dispositif. Avec l'utilisation de fibre optique, la source peut être déportée, mais l'encombrement reste conséquent.

Pour avoir une bonne résolution axiale en microscopie « light sheet », il est donc essentiel de générer une nappe excitatrice particulièrement fine, dont l'épaisseur augmente peu sur l'étendue du champ de vue imagé.

Un dispositif d'imagerie de type microscopie de fluorescence classique (objectif, filtres spectraux, lentille de tube, caméra) est utilisé pour réaliser l'image du plan excité. Ce dispositif d'imagerie est réglé de façon à ce que le plan imagé soit superposé au plan excité. Pour imager un volume complet, il faut exciter et imager toutes les tranches de l'échantillon et donc modifier la position de la nappe excitatrice et du plan imagé par rapport à l'échantillon, ou la position de l'échantillon par rapport à l'ensemble nappe + dispositif d'imagerie. De même, cet agencement engendre des contraintes en termes d'encombrement et d'installation du système d'observation.

Le but de l'invention est de proposer un système d'observation par fluorescence d'un objet biologique qui soit :
- Simple à installer et à utiliser ;
- Peu encombrant ;
- Peu coûteux ;

### Exposé de l'invention

Ce but est atteint par un système d'observation d'un objet placé dans un contenant, ledit dispositif comportant :
- Un module d'excitation comportant plusieurs dispositifs lumineux comportant chacun une sortie par laquelle est émis un signal lumineux, les dispositifs lumineux étant configurés chacun pour émettre sur leur sortie une nappe lumineuse excitatrice, suivant un plan d'excitation, lesdits dispositifs lumineux étant agencés de sorte à pouvoir créer sur leurs sorties plusieurs nappes lumineuses excitatrices superposées, suivant plusieurs plans d'excitation parallèles entre eux,
- Un dispositif d'imagerie comportant un axe orienté perpendiculairement aux plans d'excitation et positionné de sorte à capturer une image suivant un plan imagé qui soit superposé à l'un desdits plans d'excitation,
- Une unité de contrôle configurée pour activer ou désactiver individuellement chaque dispositif lumineux, et pour commander ledit dispositif d'imagerie en vue de pouvoir déplacer le plan imagé,
- L'unité de contrôle est configurée pour exécuter une séquence de commande dans laquelle elle active, un par un, chaque dispositif lumineux, et contrôle de manière synchronisée ledit dispositif d'imagerie pour capturer au moins une image en faisant coïncider le plan imagé au plan d'excitation de la nappe lumineuse excitatrice du dispositif lumineux qui est activé.

Selon une réalisation particulière, chaque dispositif lumineux comporte une source lumineuse individuelle étendue spatialement dans une seule direction.

Selon une autre particularité, chaque dispositif lumineux est constitué d'un ruban OLED. Selon une autre réalisation particulière, caractérisé en ce que chaque dispositif lumineux comporte une source lumineuse couplée à un guide d'onde plan pour générer en sortie la nappe lumineuse excitatrice selon le plan d'excitation.

Selon une autre réalisation particulière, chaque dispositif lumineux comporte une source lumineuse ponctuelle, associée à des éléments optiques de mise en forme pour créer la nappe lumineuse excitatrice.

Selon une autre réalisation particulière chaque dispositif lumineux comporte un alignement dans une seule direction de plusieurs sources lumineuses ponctuelles.

Selon une particularité, ledit alignement est une ligne de pixels appartenant à un écran. Selon une réalisation particulière, le système comporte un support comportant au moins une cavité adaptée pour recevoir ledit contenant, ladite cavité comportant une paroi latérale, chaque dispositif lumineux étant agencé pour positionner sa sortie en vis-à-vis de ladite paroi latérale.

Selon une autre réalisation particulière, le système comporte un support comportant plusieurs cavités juxtaposées, chaque cavité étant adaptée pour recevoir un contenant distinct, ledit support intégrant un module d'excitation dédié à chaque cavité.

L'invention concerne également un procédé d'observation d'un objet positionné dans un contenant, mis en œuvre à l'aide du système d'observation tel que défini ci-dessus, le procédé comportant une séquence d'activation comportant des étapes de :
- Activation d'un seul dispositif lumineux, pour créer une nappe lumineuse excitatrice à travers l'objet,
- Contrôle de manière synchronisée du dispositif d'imagerie pour faire coïncider le plan imagé au plan d'excitation de la nappe lumineuse excitatrice du dispositif lumineux qui est activé,
- Capture et acquisition d'une image de fluorescence à l'aide du dispositif d'imagerie,
- La séquence d'activation est répétée plusieurs fois en activant de manière individuelle chaque dispositif lumineux du module d'excitation pour créer ladite séquence de commande,
- Le procédé comportant une étape de reconstruction en trois dimensions de l'objet par concaténation des images acquises.

### Brève description des figures

D'autres caractéristiques et avantages vont apparaître dans la description détaillée qui suit faite en regard des dessins annexés dans lesquels :
- La figure 1 montre de manière schématique le système d'observation de l'invention ;
- La figure 2 montre un premier exemple de réalisation du module d'excitation employé dans le système de l'invention ;
- La figure 3 montre un deuxième exemple de réalisation du module d'excitation employé dans le système de l'invention ;
- La figure 4 montre un troisième exemple de réalisation du module d'excitation employé dans le système de l'invention ;
- La figure 5 montre un quatrième exemple de réalisation du module d'excitation employé dans le système de l'invention ;
- La figure 6 montre une réalisation avantageuse du système de l'invention ;
- La figure 7 montre une autre réalisation avantageuse du système de l'invention ;
- La figure 8 montre une autre réalisation avantageuse du système de l'invention ;
- La figure 9 montre une autre réalisation avantageuse du système de l'invention ;
- Les figures 10A à 10E illustrent les étapes du procédé d'observation conforme à l'invention ;

Sur les figures annexées, les formes des nappes excitatrices sont montrées à titre d'exemple, pour illustrer le principe de l'invention.

### Description détaillée d'au moins un mode de réalisation

Pour la suite de la description, on définit un repère orthonormé X, Y, Z.

L'invention vise un système d'observation par fluorescence d'un échantillon, par exemple formé d'espèces biologiques ou d'un objet biologique. Dans la suite de la description et sur les figures, on prend l'exemple d'un objet biologique O. L'objet biologique O est par exemple un objet en trois dimensions.

### Objet biologique

L'objet biologique O est par exemple un agrégat de cellules. Par agrégat de cellules, on entend, selon l'invention, l'auto-assemblage d'un ou plusieurs types de cellules en trois dimensions. Un tel agrégat de cellules peut notamment s'appeler sphéroïde, organoïde, tumoroïde, neuro-sphère. Cet agrégat peut également être un îlot de Langerhans. Dans la suite de la description, on utilisera de manière générique le terme "objet biologique", référencé O, pour évoquer un tel agrégat, ce terme étant classiquement employé dans le domaine de la culture de cellules vivantes. De manière non limitative, un tel objet biologique O peut par exemple présenter un diamètre allant de quelques dizaines de µm à quelques centaines de µm.

Le principe de l'invention est notamment de venir observer un tel objet biologique O, par fluorescence. L'objet biologique comporte ainsi des fluorophores pour être excité par fluorescence.

L'objet biologique O est placé dans un contenant 1. A titre d'exemple, ce contenant 1 peut être une boite de Petri ou un puit d'une plaque à puits (voir ci-après). L'objet biologique est placé dans le contenant, de manière fixe. Il peut par exemple être noyé dans un gel ou dans un liquide pour rester fixe. Le contenant 1 comporte une paroi latérale 10 transparente aux signaux lumineux émis par le module d'excitation (voir ci-après) et une paroi inférieure 11 transparente aux signaux de fluorescence émis par l'objet biologique, pour permettre au dispositif d'imagerie d'imager le plan excité (voir ci-après).

Le contenant 1 est positionné de manière à s'étendre en hauteur selon Z et comporte ainsi sa section transversale orientée suivant un plan parallèle à X et Y. Le contenant 1 présente avantageusement une section transversale constante sur toute sa hauteur. Cette section peut être par exemple circulaire, rectangulaire ou carrée.

### Module d'excitation

Pour exciter la fluorescence, le système comporte un module d'excitation 2 comprenant plusieurs dispositifs lumineux 20, formant un empilement ou une série de plusieurs dispositifs lumineux.

Chaque dispositif lumineux 20 peut comporter une source lumineuse individuelle ou un ensemble de sources lumineuses individuelles.

Selon l'invention, chaque dispositif lumineux 20 du système est configurée pour créer, sur sa sortie, lorsqu'il est activé, une nappe lumineuse excitatrice 200 (ci-après nappe excitatrice) particulière. La nappe excitatrice 200 est ainsi générée selon un plan, dit plan d'excitation. Dans le cadre de l'invention, le plan d'excitation est généré selon X, Y.

La nappe excitatrice 200 présente la particularité d'avoir une épaisseur (selon Z) particulièrement fine. L'objectif est notamment d'obtenir une nappe excitatrice 200 dont l'épaisseur est la plus constante possible sur sa surface qui traverse l'objet biologique, et comparable à la résolution latérale de l'objectif du microscope (voir dispositif d'imagerie ci-après), afin d'obtenir une résolution isotrope.

Pour un microscope avec un objectif possédant une ouverture numérique de 0.4, qui travaille à 700 nm dans un milieu d'indice 1.33, on a une résolution latérale théorique (en rayon ou demie largeur) d'environ 2 µm et une résolution axiale (en rayon ou demie largeur) d'environ 12 µm. La nappe excitatrice devra donc disposer d'une épaisseur de quelques micromètres seulement, afin de pouvoir obtenir une résolution globale axiale (donnée par l'épaisseur de la nappe excitatrice) comparable à la résolution latérale (donnée par l'objectif d'imagerie du microscope), et ainsi tirer bénéfice du concept de microscopie « light sheet ».

De manière non limitative, le dispositif lumineux 20 utilisé pour créer une nappe excitatrice 200 peut comporter :
- Une source lumineuse (par exemple un laser) couplée à un guide d'onde plan pour générer, sur sa sortie, la nappe excitatrice selon le plan d'excitation.
- Une source lumineuse individuelle étendue spatialement dans une direction, comme un filament, une bande ou un ruban. Le terme « individuelle » signifie qu'il s'agit d'un composant unique émettant un unique signal lumineux suivant toute sa longueur. Des éléments de mise en forme du faisceau peuvent être intégrés pour conserver le confinement de la lumière et créer la nappe excitatrice en sortie.
- Une source lumineuse ponctuelle, associée à des éléments optiques de mise en forme pour créer la nappe excitatrice en sortie.
- Une association de sources lumineuses ponctuelles formant une ligne, comme par exemple, l'ensemble des pixels d'une ligne d'un écran. Des éléments optiques supplémentaires (réfractif ou diffractif) peuvent également être nécessaires pour créer la nappe excitatrice.

Les dispositifs lumineux du système sont avantageusement tous identiques.

Dans la suite de la description, on utilise le terme générique de « dispositif lumineux » pour évoquer le dispositif adapté pour émettre sur sa sortie un signal lumineux sous la forme d'une nappe excitatrice. Il peut ainsi comporter la source lumineuse et tout autre élément optique adapté à la mise en œuvre de la nappe excitatrice en sortie.

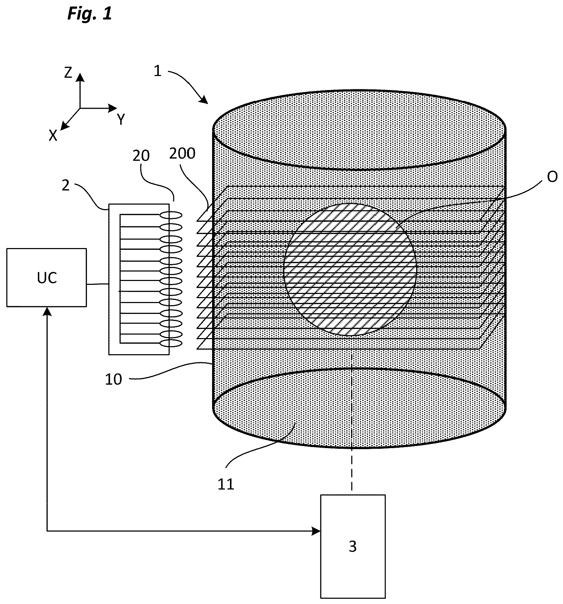

Sur la figure 1, chaque dispositif lumineux 20 est illustré par une simple source lumineuse.

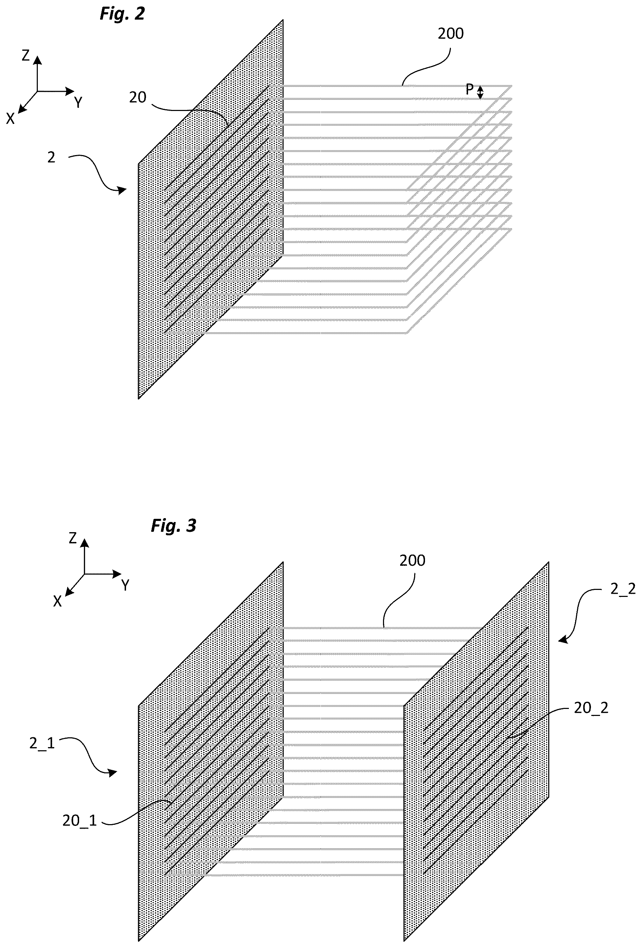

Sur les figures 2 à 5, les dispositifs lumineux 20 sont illustrés par une simple bande lumineuse (par exemple une bande OLED - voir ci-après).

Les figures 2 à 5 montrent plusieurs exemples de réalisation du module d'excitation 2 et de dispositifs lumineux utilisés dans ce module d'excitation 2.

Sur les figures annexées, les formes des nappes excitatrices 200 ne sont que des illustrations pour comprendre l'invention.

Les nappes excitatrices 200 sont avantageusement créées avec des dimensions, selon X, Y et Z, qui sont identiques d'une nappe à l'autre. Selon X, Y, chaque nappe excitatrice 200 est créée de manière à disposer d'une surface supérieure à celle de la section de l'objet biologique étudié O, voire du contenant 1.

Selon l'invention, le système d'excitation consiste à associer plusieurs dispositifs lumineux 20, chaque dispositif lumineux 20 pouvant être commandé pour créer en sortie sa propre nappe excitatrice 200.

Les dispositifs lumineux 20 sont agencés de sorte que les nappes excitatrices 200 créées en sortie soient avantageusement distinctes (c'est-à-dire sans zone de recouvrement) et parallèles entre elles. Autrement dit, les plans d'excitation des nappes 200 sont superposées suivant la direction Z lorsque les dispositifs lumineux sont activés (figures 2 à 5).

Les dispositifs lumineux sont agencés de sorte que les nappes excitatrices générées en sortie soient positionnées dans des plans d'excitation espacés d'un pas P constant non nul (figure 2).

La distance séparant les dispositifs lumineux 20 successifs dans l'empilement est adaptée pour éviter un recouvrement entre les nappes excitatrices 200 successives et pour créer assez de nappes afin d'échantillonner suffisamment l'objet biologique O à observer selon Z.

Selon l'invention, chaque nappe excitatrice 200 peut être créée à l'aide d'un seul dispositif lumineux 20 ou de plusieurs dispositifs lumineux 20 individuels et séparés.

Si la nappe excitatrice s'épaissit suivant sa direction de propagation, ou si l'objet biologique est très fortement absorbant, on peut en effet utiliser au moins deux dispositifs lumineux distincts (avec deux sorties opposées ou adjacentes) créant alors deux nappes excitatrices confondues. On vient ainsi gagner en résolution (figure 3) axiale, en s'assurant que chaque point d'un plan imagé de l'échantillon est bien excité par une nappe excitatrice d'épaisseur adéquate. Pour éviter la superposition de toutes les informations, il peut être préférable d'actionner séquentiellement chacun des dispositifs lumineux générant une même nappe, en acquérant une image du même plan à chaque actionnement d'un dispositif lumineux, puis de recombiner numériquement a posteriori ces différentes acquisitions afin de reconstituer l'image de la section observée correspondant à ce plan excité. Une telle géométrie permet également de réduire l'impact des phénomènes « d'écrantage ». En effet, si une inclusion absorbante se situe sur la direction de propagation du faisceau permettant de générer la nappe, toute la partie de l'objet se situant après l'inclusion, dans le sens de la propagation du faisceau, sera dans l'ombre de l'inclusion et ne sera pas excitée. En envoyant un faisceau pour générer la même nappe dans le sens opposé, on pourra exciter cette partie de l'échantillon qui se trouvait dans l'ombre. Sur la figure 3, le module d'excitation comporte ainsi par exemple deux unités 2_1, 2_2 symétriques entre elles par rapport à un plan vertical selon Z. Chaque unité comporte plusieurs dispositifs lumineux 20 dont les sorties sont superposées pour créer les nappes. Chaque nappe 200 est ainsi générée par deux dispositifs lumineux 20_1, 20_2 symétriques.

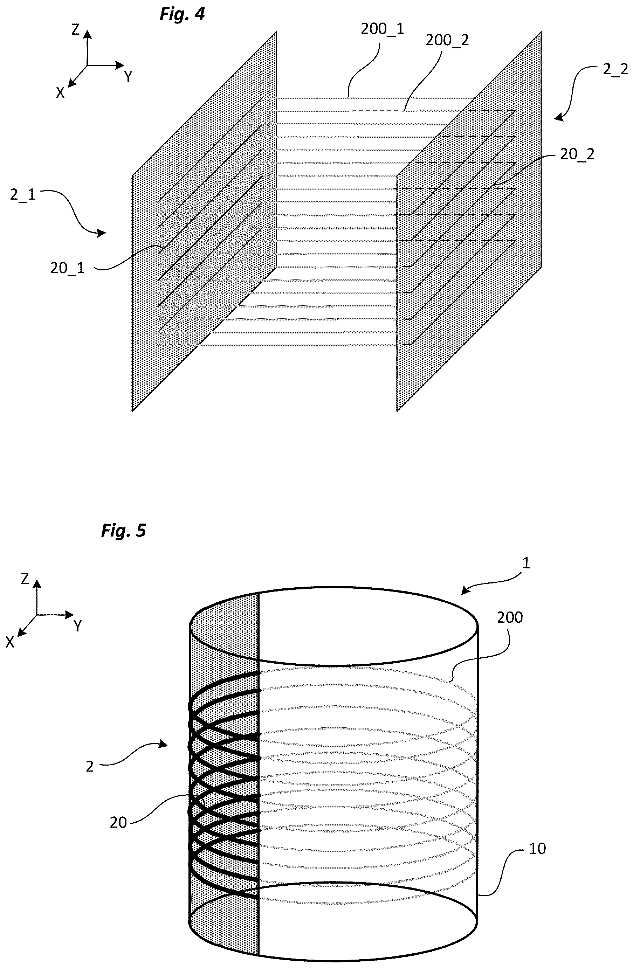

Un objectif étant de venir superposer les plans d'excitation les uns après les autres, les dispositifs lumineux du module d'excitation peuvent être décalés autour du contenant, à la fois en X, Y et en Z (figure 4 - positionnement en quinconce selon Z). Sur la figure 4, le module d'excitation comporte également deux unités 2_1, 2_2, les sorties des dispositifs lumineux 20_1 de la première unité 2_1 étant décalées selon Z par rapport aux sorties des dispositifs lumineux 20_2 de la deuxième unité 2_2 du module d'excitation. Les dispositifs lumineux 20_1 de la première unité 2_1 créent une première série de nappes excitatrices 200_1 et ceux de la deuxième unité 2_2 du module d'excitation créent une deuxième série de nappes excitatrices 200_2. Sur la figure 4, les nappes sont créées en quinconce par les deux unités mais on pourrait imaginer un autre agencement des deux séries de dispositifs lumineux 20_1, 20_2. Une telle configuration permet d'avoir un espacement (selon Z) entre deux plans successifs imagés qui soit inférieur à l'espacement entre deux sorties ou deux dispositifs lumineux d'une même unité. Cet espacement entre deux sorties ou deux dispositifs lumineux d'une même unité peut en effet être dicté par des contraintes matérielles (taille des composants et de l'électronique associé). Un agencement en quinconce permet ainsi d'avoir un pas d'échantillonnage axiale pour l'imagerie de l'objet qui soit la moitié du pas « matériel » de l'unité. La figure 4 illustre une géométrie avec seulement deux unités face à face, mais on peut envisager d'avoir jusqu'à quatre unités sur chacune des faces latérales d'un cube, et ainsi obtenir un échantillonnage axiale égal au quart de l'espacement entre deux sorties ou deux dispositifs. Pour une géométrie avec une section polygonale à N côtés, on peut envisager d'avoir N unités, avec une unité par côté, et ainsi atteindre un échantillonnage spatial égal à 1/N fois l'espacement (selon Z) entre deux sorties ou deux dispositifs.

Il est également possible de créer un module d'excitation 2 dont les sorties des dispositifs lumineux sont courbées. La sortie de chaque dispositif lumineux 20 peut notamment disposer d'une forme venant épouser la courbure de la paroi latérale 10 du contenant 1 (cas d'un contenant à section transversale courbe - par exemple circulaire - figure 5). Il s'agit notamment du cas de dispositifs lumineux qui utilisent un ruban lumineux de type ruban OLED. Dans ce cas, la source lumineuse elle-même du dispositif est courbée.

De même, la sortie de chaque dispositif lumineux 20 peut même s'étendre suivant un contour fermé. Dans ce cas, elle peut par exemple s'étendre en vis-à-vis ou se fixer tout autour de la paroi latérale 10 du contenant 1, suivant X, Y.

### Unité de contrôle

Le système de l'invention comporte une unité de contrôle UC chargée de commander chaque dispositif lumineux 20 du module d'excitation 2 de manière individualisée. Autrement dit, l'unité de contrôle UC peut allumer ou éteindre chaque dispositif lumineux 20 du module d'excitation 2 et venir ainsi activer ou désactiver chaque nappe excitatrice 200. L'unité de contrôle UC est également configurée pour commander le dispositif d'imagerie (voir ci-après) et avantageusement pour traiter les images acquises à l'aide de ce dispositif d'imagerie 3. La séquence de commande (voir ci-après) est exécutée par l'unité de contrôle et mémorisée dans des moyens de mémorisation de l'unité de contrôle.

### Dispositif d'imagerie

Selon l'invention, le système d'observation comporte également un dispositif d'imagerie 3 adapté pour réaliser l'image du plan excité (par la nappe). Ce dispositif d'imagerie 3 est adapté pour observer la fluorescence émise après excitation.

Pour observer la fluorescence, le dispositif d'imagerie 3 est positionné de sorte que son axe optique soit orienté suivant Z pour créer un plan imagé selon X, Y, ce plan imagé étant confondu avec le plan d'excitation (c'est-à-dire avec la nappe excitatrice 200 qui est activée). Etant donné qu'en microscopie « light sheet », l'objectif est que le plan imagé soit fin, cela explique la nécessité de disposer d'une nappe excitatrice particulièrement fine.

Le dispositif d'imagerie 3 peut être constitué d'une solution de microscopie de fluorescence classique (objectif, filtres spectraux, lentille de tube, caméra). Le dispositif d'imagerie 3 doit être contrôlé pour que le plan imagé soit superposé au plan excité. Pour cela, il est possible de déplacer le dispositif d'imagerie (notamment son objectif) de façon synchrone par rapport à la création séquentielles des différentes nappes excitatrices (voir la séquence de commande ci-dessous), par allumage successifs des différents dispositifs lumineux 20. Le déplacement de l'objectif du dispositif d'imagerie 3 garantit que la mise au point est bien réalisée sur le plan excité, ou autrement dit que le plan imagé est bien superposé au plan excité.

### Fonctionnement

Selon l'invention, l'unité de contrôle UC est configurée pour exécuter une séquence de commande des dispositifs lumineux du module d'excitation 2. Cette séquence de commande est mémorisée par l'unité de contrôle.

Elle contrôle chaque dispositif lumineux 20 du module d'excitation 2, par exemple l'un après l'autre, pour créer chaque nappe excitatrice 200 dans un plan d'excitation différent. Tout ordre d'activation des dispositifs lumineux pourrait être envisagé, à partir du moment où l'unité de contrôle UC est en mesure d'effectuer une reconstruction en tenant compte de cet ordre. Un ordre d'activation de type incrémental reste l'option la plus simple.

De manière synchrone, l'unité de contrôle UC commande le dispositif d'imagerie 3 pour que le plan imagé soit superposé au plan d'excitation.

Pour chaque plan d'excitation, l'unité de contrôle UC commande l'acquisition d'une image à l'aide du dispositif d'imagerie 3.

Comme les dispositifs lumineux sont agencés pour créer des nappes excitatrices 200 superposées, l'unité de contrôle UC acquière plusieurs images en fluorescence de l'objet biologique O, formant un empilement. L'unité de contrôle UC (ou une autre unité de traitement) peut ensuite reconstruire le volume en 3D de l'objet, en concaténant les images empilées acquises.

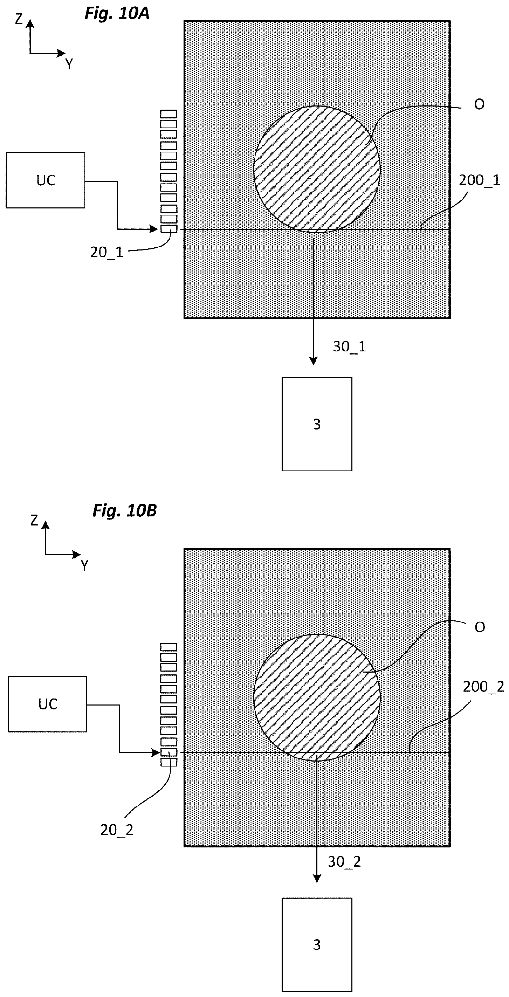

Les figures 10A à 10E illustrent ce principe de fonctionnement avec un module d'excitation comportant une série de dispositifs lumineux référencés 20_i, avec i allant de 1 à N et N supérieur à 2.

Figure 10A : L'unité de contrôle UC active un premier dispositif lumineux 20_1 du module d'excitation 2, pour créer une première nappe excitatrice 200_1 à travers l'objet biologique O. Les autres dispositifs lumineux restent éteints. L'unité de contrôle UC commande le dispositif d'imagerie 3 pour positionner le plan imagé sur le plan excité et pour capturer une première image 30_1 de fluorescence.

Figure 10B : L'unité de contrôle UC éteint le premier dispositif lumineux 20_1 et active le deuxième dispositif lumineux 20_2 de la série du module d'excitation 2 pour créer une deuxième nappe excitatrice 200_2. De manière identique, il pilote le dispositif d'imagerie pour acquérir une image 30_2, en faisant coïncider le plan imagé avec le plan excité.

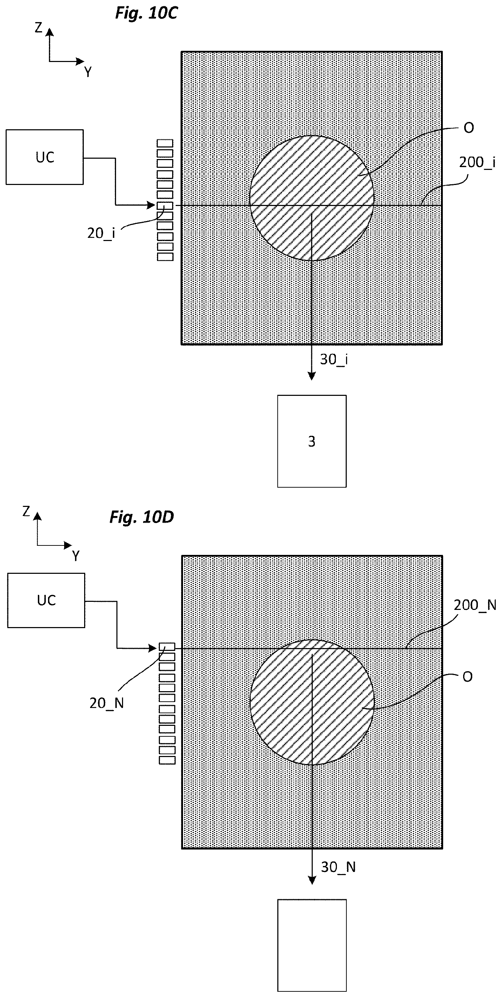

Figure 10C : L'unité de contrôle UC reproduit le même schéma pour chaque dispositif lumineux 20_i du module d'excitation 2, afin d'acquérir une image 30_i de chaque plan excité.

Figure 10D : L'unité de contrôle UC termine l'acquisition de la dernière image 30_N par l'activation du dernier dispositif lumineux 20_N de la série.

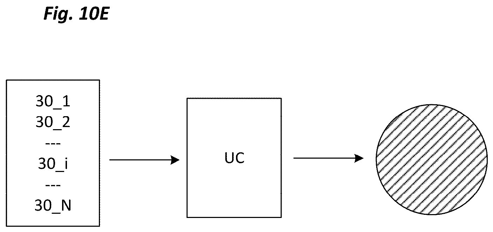

Figure 10E : L'unité de contrôle traite toutes les images acquises (30_1, i allant de 1 à N) et effectue une concaténation afin de reconstituer une image de fluorescence de l'objet biologique O en trois dimensions.

### Différents modes de réalisation

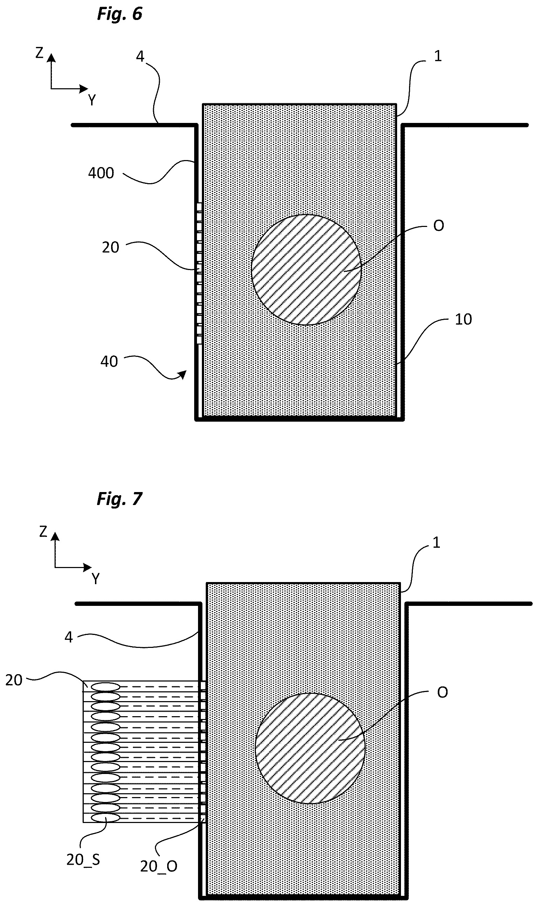

Les figures 6 à 9, détaillées ci-dessous, doivent être comprises en intégrant également le dispositif d'imagerie 3 et l'unité de contrôle UC.

De manière avantageuse, chaque dispositif lumineux 20 peut être réalisé sous la forme d'un ruban OLED (« Organic Light-Emitting Diode »). Ce ruban OLED est réalisé de manière spécifique pour que son faisceau lumineux, créé en sortie, soit sous la forme de la nappe excitatrice 200. Ce type de ruban comporte plusieurs avantages notamment en termes de compacité, de facilité de montage et de coût. Il peut notamment être courbé pour suivre la courbure de la paroi latérale du contenant, et même se fixer directement sur la paroi latérale du contenant. Une telle géométrie permet de s'assurer que la source lumineuse générant la nappe excitatrice est au plus près de l'échantillon, garantissant ainsi une épaisseur de nappe fine malgré les éventuelles déformations de la nappe dues à la propagation (absorption, réfraction) dans l'échantillon. Cette géométrie permet également de s'affranchir des problématiques d'écrantage expliquées ci-dessus.

Le système peut comporter un support 4 sur lequel sont assemblés les dispositifs lumineux 20 du module d'excitation.

A titre d'exemple, on peut ainsi imaginer plusieurs réalisations distinctes :
- Une première réalisation, particulièrement avantageuse, dans laquelle les dispositifs lumineux 20 sont intégrés au support 4, le contenant 1 venant se positionner dans une cavité 40 du support 4 (figure 6). Cette réalisation sera particulièrement adaptée aux dispositifs lumineux 20 de type ligne ou ruban lumineux, par exemple de type ruban OLED (voir ci-dessus). Chaque dispositif lumineux 20 vient se positionner sur la paroi latérale 400 de la cavité 40 du support, en vis-à-vis de la paroi latérale 10 du contenant 1, lorsque celui-ci est positionné dans le support 4.
- Une deuxième réalisation où chaque source lumineuse 20_S d'un dispositif lumineux 20 est déportée par rapport au support 4, le support 4 portant par exemple des éléments optiques 20_O configurés pour créer ou participer à la création de chaque nappe excitatrice (figure 7).

Le support 4 est adapté pour recevoir ledit contenant, de sorte que celui-ci vienne se positionner par sa face latérale en vis-à-vis des sorties des dispositifs lumineux du module d'excitation, son axe étant orienté parallèlement à la direction Z.

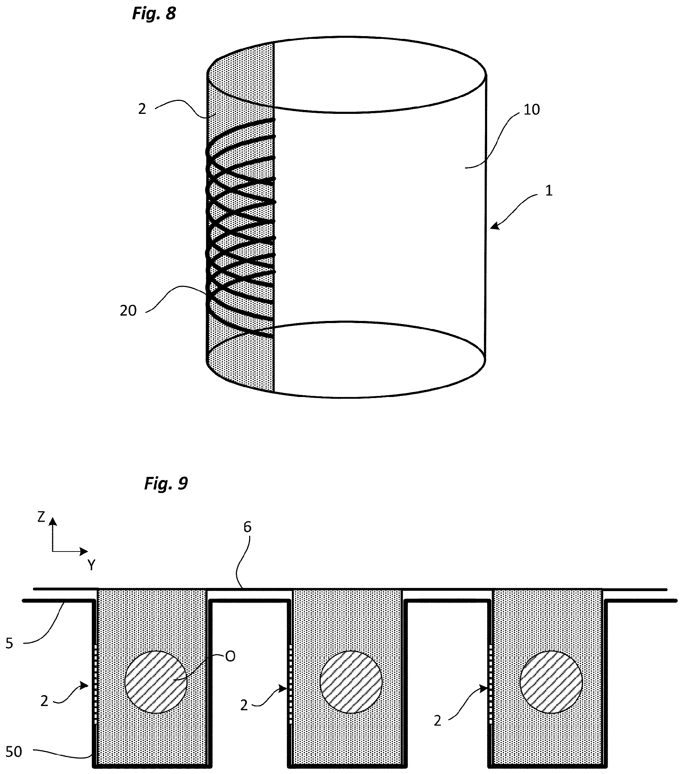

Il est également possible de prévoir une solution dans laquelle les dispositifs lumineux 20 sont directement fixés, en totalité ou partiellement, sur la paroi latérale 10 du contenant 1 (figure 8). Ce type de solution peut être mis en œuvre à l'aide de dispositifs lumineux réalisés sous forme de rubans, tels que des rubans OLED, ceux-ci pouvant se positionner aisément sur la paroi latérale 10 en se conformant à la forme de cette paroi.

Dans les différentes réalisations, chaque dispositif lumineux 20 peut ainsi être activé pour créer sa nappe excitatrice 200 à travers le contenant 1 suivant le plan d'excitation perpendiculaire à l'axe du contenant (selon Z) et donc parallèlement à une section transversale distincte du contenant.

Suivant une réalisation avantageuse, on peut envisager d'utiliser plusieurs modules d'excitation 2 intégrés dans un support 5 comprenant des cavités 50 adaptées pour recevoir les puits d'une plaque à puits 6. Les modules d'excitation 2 sont dupliqués pour chaque cavité de réception, chaque module d'excitation étant déposé sur la face interne ou externe de chaque cavité, selon la technologie utilisée pour les sources des dispositifs lumineux, et le rayon de courbure des cavités (figure 9).

On peut ainsi envisager de créer un « sabot » dans lequel on vient positionner les plaques à puits de manière reproductible pour un format de plaque donné. Ainsi la plaque à puits 6 ne contient aucun élément du système, toute la partie source, alimentation, pilotage sera dans le support, ce qui relâche les contraintes en termes de réalisation/intégration.

La solution de l'invention est donc particulièrement simple et peu encombrante pour imager un objet biologique en trois dimensions.

## Revendications

1. Système d'observation d'un objet placé dans un contenant (1), ledit dispositif étant **caractérisé en ce qu'**il comporte :
- Un module d'excitation (2) comportant plusieurs dispositifs lumineux (20) comportant chacun une sortie par laquelle est émis un signal lumineux, les dispositifs lumineux (20) étant configurés chacun pour émettre sur leur sortie une nappe lumineuse excitatrice (200), suivant un plan d'excitation, lesdits dispositifs lumineux (20) étant agencés de sorte à pouvoir créer sur leurs sorties plusieurs nappes lumineuses excitatrices (200) superposées, suivant plusieurs plans d'excitation parallèles entre eux,
- Un dispositif d'imagerie (3) comportant un axe orienté perpendiculairement aux plans d'excitation et positionné de sorte à capturer une image suivant un plan imagé qui soit superposé à l'un desdits plans d'excitation,
- Une unité de contrôle (UC) configurée pour activer ou désactiver individuellement chaque dispositif lumineux (20), et pour commander ledit dispositif d'imagerie (3) en vue de pouvoir déplacer le plan imagé,
- L'unité de contrôle (UC) est configurée pour exécuter une séquence de commande dans laquelle elle active, un par un, chaque dispositif lumineux (20), et contrôle de manière synchronisée ledit dispositif d'imagerie pour capturer au moins une image en faisant coïncider le plan imagé au plan d'excitation de la nappe lumineuse excitatrice (200) du dispositif lumineux qui est activé.

2. Système selon la revendication 1, **caractérisé en ce que** chaque dispositif lumineux (20) comporte une source lumineuse individuelle étendue spatialement dans une seule direction.

3. Système selon la revendication 2, **caractérisé en ce que** chaque dispositif lumineux (20) est constitué d'un ruban OLED.

4. Système selon la revendication 1, **caractérisé en ce que** chaque dispositif lumineux (20) comporte une source lumineuse couplée à un guide d'onde plan pour générer en sortie la nappe lumineuse excitatrice (200) selon le plan d'excitation.

5. Système selon la revendication 1, **caractérisé en ce que** chaque dispositif lumineux (20) comporte une source lumineuse ponctuelle, associée à des éléments optiques de mise en forme pour créer la nappe lumineuse excitatrice (200).

6. Système selon la revendication 1, **caractérisé en ce que** chaque dispositif lumineux (20) comporte un alignement dans une seule direction de plusieurs sources lumineuses ponctuelles.

7. Système selon la revendication 6, **caractérisé en ce que** ledit alignement est une ligne de pixels appartenant à un écran.

8. Système selon l'une des revendications 1 à 7, **caractérisé en ce qu'**il comporte un support (4) comportant au moins une cavité (40) adaptée pour recevoir ledit contenant, ladite cavité (40) comportant une paroi latérale (400), chaque dispositif lumineux (20) étant agencé pour positionner sa sortie en vis-à-vis de ladite paroi latérale.

9. Système selon l'une des revendications 1 à 7, **caractérisé en ce qu'**il comporte un support (5) comportant plusieurs cavités (50) juxtaposées, chaque cavité étant adaptée pour recevoir un contenant (1) distinct, ledit support intégrant un module d'excitation (2) dédié à chaque cavité (50).

10. Procédé d'observation d'un objet (O) positionné dans un contenant (1), mis en œuvre à l'aide du système d'observation tel que défini dans l'une des revendications 1 à 9, **caractérisé en ce qu'**il comporte une séquence d'activation comportant des étapes de :
- Activation d'un seul dispositif lumineux (20_1), pour créer une nappe lumineuse excitatrice (200_1) à travers l'objet,
- Contrôle de manière synchronisée du dispositif d'imagerie (3) pour faire coïncider le plan imagé au plan d'excitation de la nappe lumineuse excitatrice (200_1) du dispositif lumineux qui est activé,
- Capture et acquisition d'une image (30_1) de fluorescence à l'aide du dispositif d'imagerie,
Et **en ce que** :
- La séquence d'activation est répétée plusieurs fois en activant de manière individuelle chaque dispositif lumineux (20_i) du module d'excitation (2) pour créer ladite séquence de commande,
- Le procédé comporte une étape de reconstruction en trois dimensions de l'objet par concaténation des images acquises.
